# EUROPEAN PATENT SPECIFICATION

(11) **EP 1 655 532 B1**
(45) Date of publication and mention of the grant of the patent: **21.05.2008**
(21) Application number: 05014181.1
(22) Date of filing: 30.06.2005
(51) Int. Cl.: F16M 11/10

(54) **Angle adjustable supporting stand**
Winkeleinstellbare Tragvorrichtung
Support à inclinaison réglable

(30) Priority: 04.11.2004 CN 200420107095
(43) Date of publication of application: 10.05.2006
(73) Proprietor: Coretronic Corporation, Chu-Nan 350, Miao-Li County (TW)
(72) Inventor: Yuan, Min-Hao, Chu-Nan 350 Miao-Li County (TW)
(74) Representative: TER MEER - STEINMEISTER & PARTNER GbR

(56) References cited:
- EP-A- 0 973 062
- US-A1- 2005 035 252
- US-A1- 2005 109 893
- PATENT ABSTRACTS OF JAPAN vol. 1996, no. 10, 31 October 1996 (1996-10-31) -& JP 08 152936 A (RICOH CO LTD), 11 June 1996 (1996-06-11)

## Description

The present invention relates to a supporting stand, and more particularly, to an angle adjustable supporting stand.

### BACKGROUND OF THE INVENTION

Liquid crystal display (LCD) devices have been widely used as monitors of a personal computer or a television nowadays. Recently, a touch panel incorporated in a LCD device now more typically plays a greater role as an input device such as a pen-based handwriting input device.

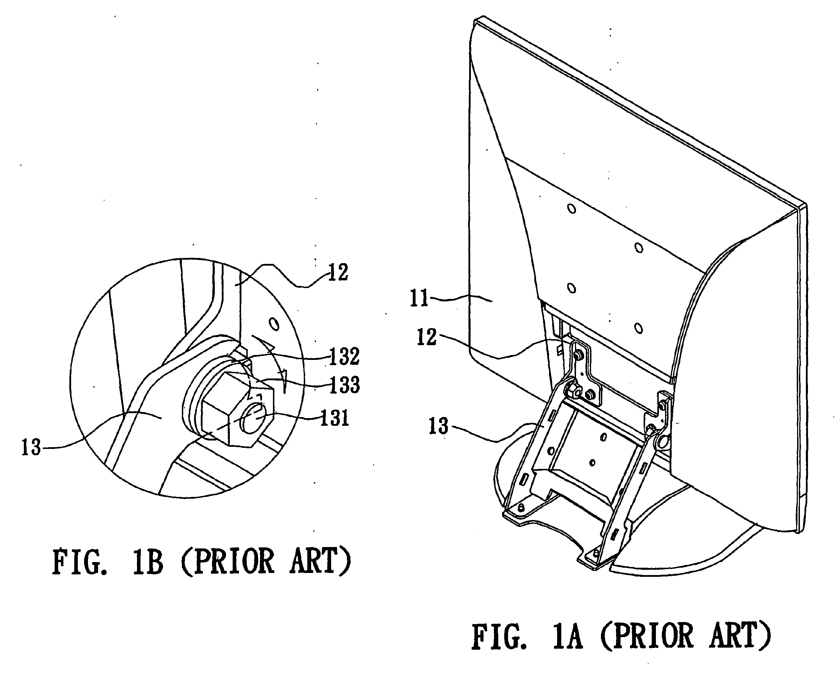

However, there is no stand particularly designed for a LCD device with a touch panel or a handwriting panel; instead, a stand for a LCD device with a conventional display panel is often used. Please refer to FIG. 1A and FIG. 1B. A connecting seat 12 is disposed on the back of a conventional display panel 11, and a supporting stand 13 is fixed to the connecting seat 12 by a pivot axle 131 sleeved with an elastic spacer 132 and a nut 133, and thereby the connecting seat 12 is pivoted on the supporting stand 13. The elastic spacer 132 presses the connecting seat 12 and the supporting stand 13 by being pressed from the nut 133, and thereby the connecting seat 12 is fixed on the supporting stand 13 with an angle. When the angle of the display panel 11 is to be adjusted, the display panel 11 is pulled for changing the angle between the connecting seat 12 and the supporting stand 13. However, the elasticity of the elastic spacer 132 fatigues or the contact surface of the elastic spacer 132 to the connecting seat 12 and the supporting stand 13 wears after being used for a long time such that the display panel 11 on the connecting seat 12 cannot maintain a predetermined angle relative to the supporting stand 13. Besides, the angle of the display panel 11 cannot be adjusted greatly when the display panel is a handwriting panel or a touch panel, and in addition, the angle thereof is often changed with the force of handwriting or touching upon the panel.

Therefore, how to make the angle between the supporting stand and the panel change with the need for display or handwriting, and maintaining the angle while the force of handwriting or touching acts upon the panel or when the weight of a panel is too heavy due to the size thereof, are main objectives of the present invention.

EP 0 973 062 A1 is concerned with a projection display device and discloses an angle adjustable supporting stand having a base seat; a connecting seat formed as a plate with frame portions that form a containing groove, one end of the connecting seat being pivotally connected to the front of the base seat; and a supporting plate disposed on the one side of the connecting seat, the lower end of the supporting plate being pivotally connected to the base seat. A sliding member being disposed on the upper end of the supporting plate and being formed in a C-shape, covering a longitudinal guiding member which is disposed in the center portion between the frame portions opposing each other of the connecting seat. A control set disposed on the other side of the connecting seat comprises a retaining member that extends from the other side of the connecting seat through an opening portion of the plate of the connecting seat into the containing groove, and a lever for retracting the retaining member from the containing groove. The sliding member and the retaining member are both provided with a plurality of teeth so that the retaining member blocks the sliding member when the corresponding teeth are in engagement and releases the sliding member for angle adjustment when it is retracted by the lever.

### SUMMARY OF THE INVENTION

One objective of the present invention is to provide an angle adjustable supporting stand, wherein a handle controls the guiding plate to move along a direction and causes the sliding plate to move along a direction to make the teeth on one lateral side of the sliding plate to be separated from the teeth of a locking member. The locking member is then unfixed and drives a sliding block to slide for adjusting the angle. According to the need of a user, the angle between the base seat and the connecting seat can be adjusted greatly to meet the need for display or touch control of the panel.

Another objective of the present invention is to provide an angle adjustable supporting stand, wherein a handle is disposed on a lateral side of a control set for the user to easily control the guiding plate to move along a direction and causes the sliding plate to move along a direction to make the locking member unfixed for driving the sliding block to slide for adjusting the angle. The torque produced from the handle easily adjusts the angle between the base seat and the connecting seat of a heavier or bigger panel.

Still another objective of the present invention is to provide an angle adjustable supporting stand, wherein the handle is disposed on a lateral side of the supporting stand for the user to control the handle conveniently.

Still another objective of the present invention is to provide an angle adjustable supporting stand, wherein a positioning block disposed on a cover plate is fixed in a positioning hole of the sliding plate for making the teeth of the sliding plate and the teeth of the locking member more fixed.

Still another objective of the present invention is to provide an angle adjustable supporting stand, wherein a projection device is disposed on the supporting stand, and the projection device can project images on the ceiling or on the wall by adjusting the angle of the supporting stand.

For achieving the above objectives, the angle adjustable supporting stand according to the present invention includes a base seat, a connecting seat and a supporting plate. The front end of the base seat is pivotally connected to the connecting seat. The connecting seat includes a seat body with a containing groove. A vertical slot is opened on the bottom of the containing groove and a control set is disposed on a lateral side of the vertical slot. The supporting plate is pivotally connected to the base seat, and a sliding block is pivotally connected to the upper end of the supporting plate. The sliding block can move along the vertical slot opened on the containing groove. The control set controls and adjusts the location of the sliding block relative to the vertical slot, so that the angle between the connecting seat and the base seat is adjusted.

### BRIEF DESCRIPTION OF THE DRAWINGS

FIG. 1A is a schematic three-dimensional view showing a conventional supporting stand and a panel.
FIG. 1B is a schematic view showing the combination of a conventional supporting stand and a panel.
FIG. 2 is an exploded three-dimensional view showing the angle adjustable supporting stand of the present invention.
FIG. 3 is a schematic view showing the control set of the angle adjustable supporting stand of the present invention.
FIG. 4 is another schematic view showing the control set of the angle adjustable supporting stand of the present invention.
FIG. 5 is a lateral schematic view showing the angle adjustable supporting stand of the present invention.
FIG. 6 is a schematic view showing the control set of the angle adjustable supporting stand in the second embodiment of the present invention.
FIG. 7 is another schematic view showing the control set of the angle adjustable supporting stand in the second embodiment of the present invention.
FIG. 8 is an exploded three-dimensional view showing the angle adjustable supporting stand in the third embodiment of the present invention.
FIG. 9 is a schematic view showing the control set of the angle adjustable supporting stand in the third embodiment of the present invention.
FIG. 10 is a partial cross-section view showing the positioning block of the cover plate and the positioning hole from the A-A line of the angle adjustable supporting stand in the present invention.
FIG. 11 is another partial cross-section view showing the positioning block of the cover plate and the positioning hole from the A-A line of the angle adjustable supporting stand in the present invention.
FIG. 12 is an exploded view showing the angle adjustable supporting stand in the present invention and a projection device.
FIG. 13A and FIG. 13B are schematic views showing the motion of the angle adjustable supporting stand in the present invention.

### DETAILED DESCRIPTION OF THE PREFERRED EMBODIMENT

For the above objectives, three preferred embodiments of the present invention will be explained with reference to the accompanying drawings.

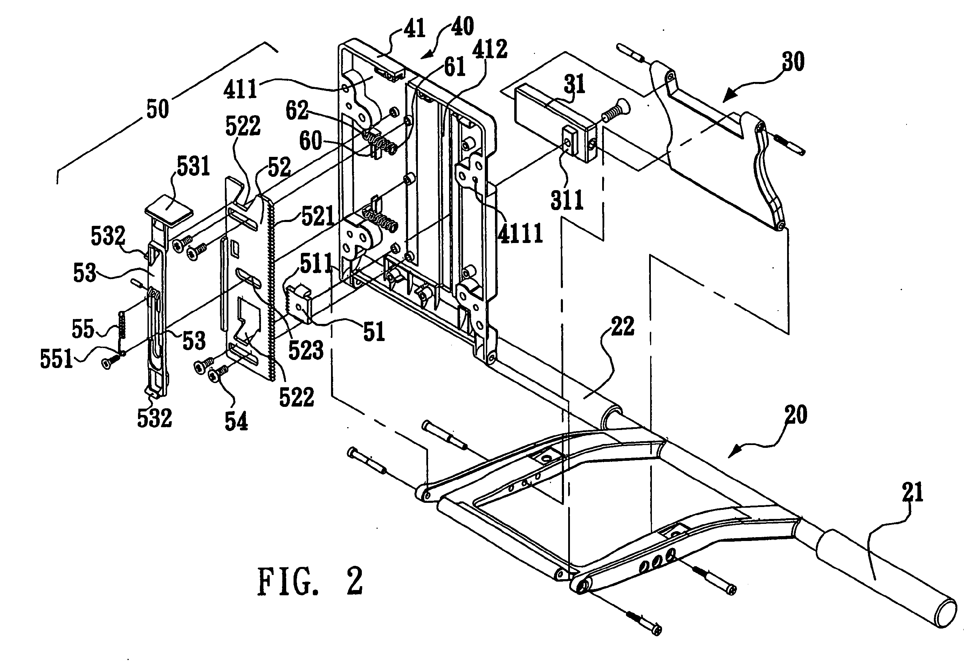

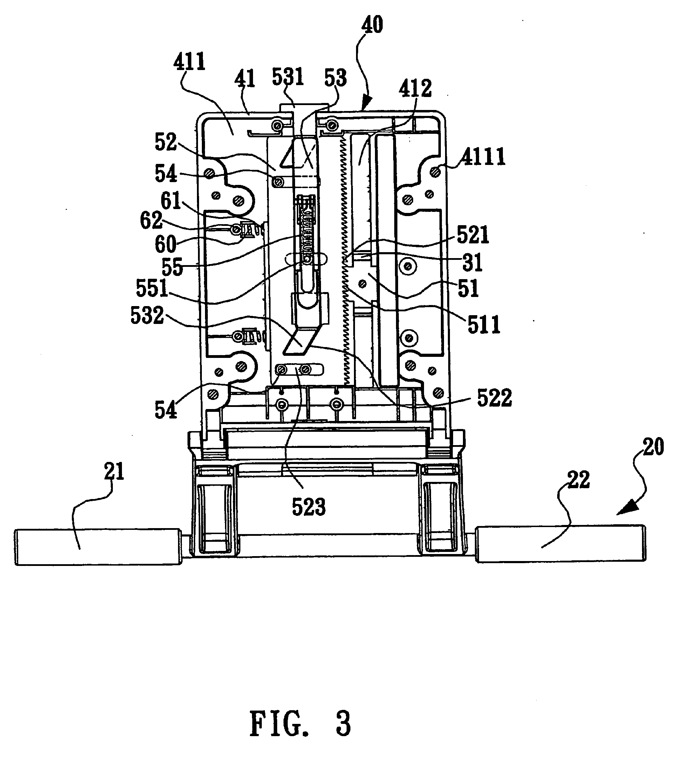

Please refer to FIG. 2 and FIG. 3. The adjustable supporting stand of the present invention includes a base seat 20, a supporting plate 30 and a connecting seat 40. A pair of level foot 21 and foot 22 is extended from the rear end of the base seat 20. The bottom of the connecting seat 40 is pivotally connected to the front end of the base seat 20. The connecting seat 40 includes a seat body 41 with a containing groove 411 disposed with a plurality of connection holes 4111 for various kinds of display devices. A vertical slot 412 is opened on the bottom of the containing groove 411. A control set 50 is disposed on a lateral side of the vertical slot 412.

The control set 50 includes a locking member 51, a sliding plate 52 and a guiding plate 53. The locking member 51 can slide in the vertical slot 412, and a plurality of teeth 511 is disposed on one lateral side thereof. The sliding plate 52 is disposed on a lateral side of the vertical slot 412, and a plurality of teeth 521 is disposed on one lateral side of the sliding plate 52 corresponding to the teeth 511 of the locking member 51. The plurality of teeth 521 is engaged with the teeth 511 of the locking member 51 for the locking member 51 to be located in the vertical slot 412. The lateral side of the sliding plate 52 relative to the teeth 521 is pushed by an end 61 of a reposition member 60, and another end 62 of the reposition member 60 is fixed to the seat body 41 (as shown in FIG. 3). The reposition member 60 can be an elastic member such as a spring or a leaf spring. Two oblique slots 522 are disposed respectively at the upper end and near the lower end of the sliding plate 52. The oblique slots 522 incline with a small angle to one side opposite to the other side facing the vertical slot 412. At least one level slot 523 are disposed on the sliding plate 52, and a guiding member 54 fixed to the bottom of the containing groove 411 is disposed through the level slot 523. By the guiding member 54, the sliding plate 52 can move transversely and move right and left on the bottom of the containing groove 411. The guiding plate 53 is disposed on the upper surface of the sliding plate 52, and a handle 531 is disposed on the upper end of the guiding plate 53. Oblique guiding blocks 532 contained in the oblique slots 522 of the sliding plate 52 are disposed respectively at the upper and lower ends of the lower surface of the guiding plate 53. The number of the oblique guiding blocks 532 is the same as that of the oblique slots 522, and the oblique guiding blocks 532 can slide in the oblique slots 522 of the sliding plate 52. An elastic member 55 is disposed on the guiding plate 53. Another end 551 of the elastic member 55 is fixed to the bottom of the containing groove 411 for providing the guiding plate 53 a reposition force to move elastically on the surface of the sliding plate 52.

Further, the supporting plate 30 is disposed on the rear of the connecting seat 40 for supporting the connecting seat 40 and forming an angle between the connecting seat 40 and the base seat 20. The lower end of the supporting plate 30 is pivotally connected to the base seat 20. A sliding block 31 is pivotally connected to the upper end of the supporting plate 30. A protruding post 311 is disposed on the sliding block 31 and can pass through the vertical slot 412 of the containing groove 411 for being disposed therein. The protruding post 311 is connected with the locking member 51 of the control set 50 for the locking member 51 and the sliding block 31 to move up and down together in the vertical slot 412, and thereby the angle between the connecting seat 40 and the base seat 20 can be adjusted.

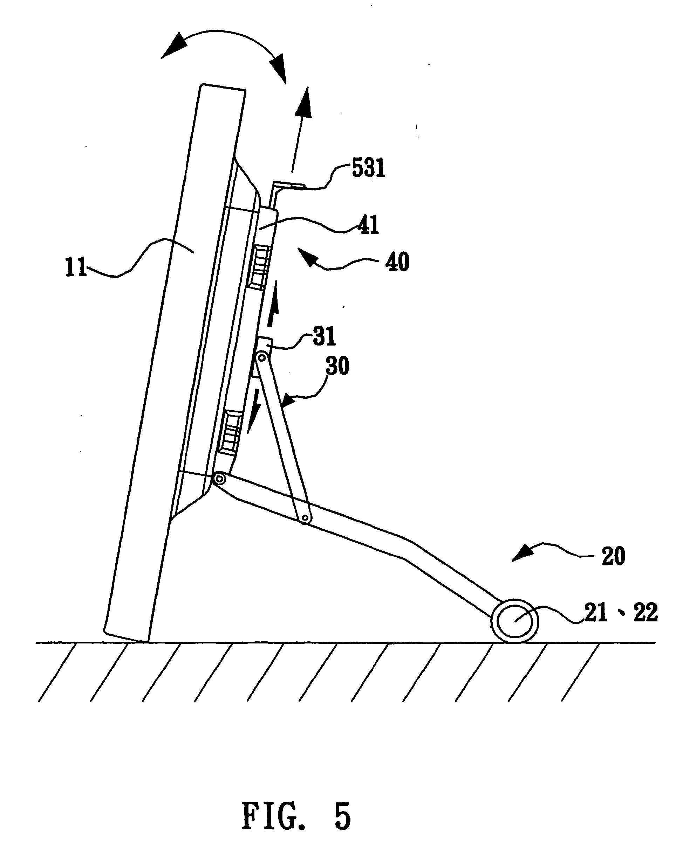

Please refer to FIG. 3, FIG. 4 and FIG. 5. The angle adjustable supporting stand in the present invention is applied to a display panel 11 screwed to the connection hole 4111 on the front face of the connecting seat 40. The level foot 21 and foot 22 of the base seat 20 and the bottom of the display panel 11 are supported on the desk. The teeth 511 of the locking member 51 are engaged with the teeth 521 of the sliding plate 52 to be fixed (as shown in FIG. 3). Thereby, the sliding block 31 is fixed to the rear of the connecting seat 40 for maintaining a fixed angle between the base seat 20 and the connecting seat 40.

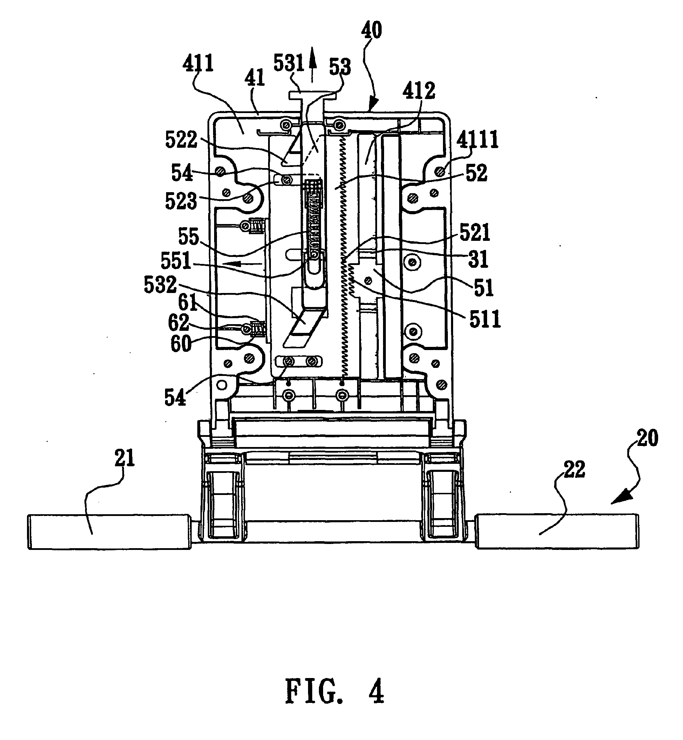

When the angle of the display panel 11 is to be adjusted, the handle 531 of the seat body 41 extended from the upper end of the guiding plate 53 can be applied a force to make the elastic member 55 on the guiding plate 53 to be deformed for the guiding member 54 to move on the upper surface of the sliding plate 52 and for the oblique guiding block 532 on the lower surface of the guiding plate 53 to push the wall surface of the oblique slot 522 of the sliding plate 52. Meanwhile, by the guiding effect of the level slot 523 and the guiding member 54, the sliding plate 52 moves leftward levelly and pushes the reposition member 60 that pushes the lateral side of the sliding plate 52 at first to be pressed and deformed. At the meantime, the teeth 521 of the sliding plate 52 are separated from the teeth 511 of the locking member 51 for the locking member 51 to be unfixed (as shown in FIG. 4). Then the sliding block 31 can move upward and downward along the vertical slot 412 so as to adjust the angle between the base seat 20 and the connecting seat 40.

As the angle between the base seat 20 and the connecting seat 40 is adjusted to be a predetermined one, the handle 531 is loosened and the guiding plate 53 returns to the original position elastically by the reposition force of the elastic member 55. When the guiding plate 53 returns, the oblique guiding block 532 thereof pushes the wall surface of the oblique slot 522 of the sliding plate 52 to make the sliding plate 52 return by the guiding of the guiding member 54, and the teeth 521 of the sliding plate 52 are engaged with the teeth 511 of the locking member 51 again to be fixed. The main effect of the reposition member 60 pushing the lateral side of the sliding plate 52 is to assist the guiding plate 53 to push the sliding plate 52 for reposition when the sliding plate 52 returns.

Furthermore, the teeth 521 of the sliding plate 52 and the teeth 511 of the locking member 51 can be ratches sustainable to more pressure. Thereby, when the connecting seat 40 and the base seat 20 sustain heavier display panel 11 or more pressing force, the angle between the connecting seat 40 and the base seat 20 does not change because of the separation of the engaged teeth 511 and teeth 521, wherein the separation is resulted from the deformation of the connecting seat 40.

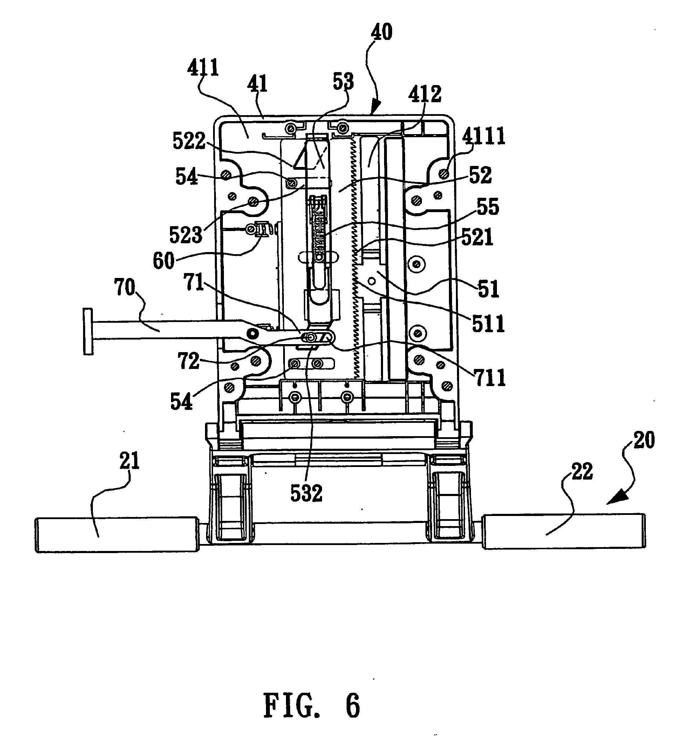

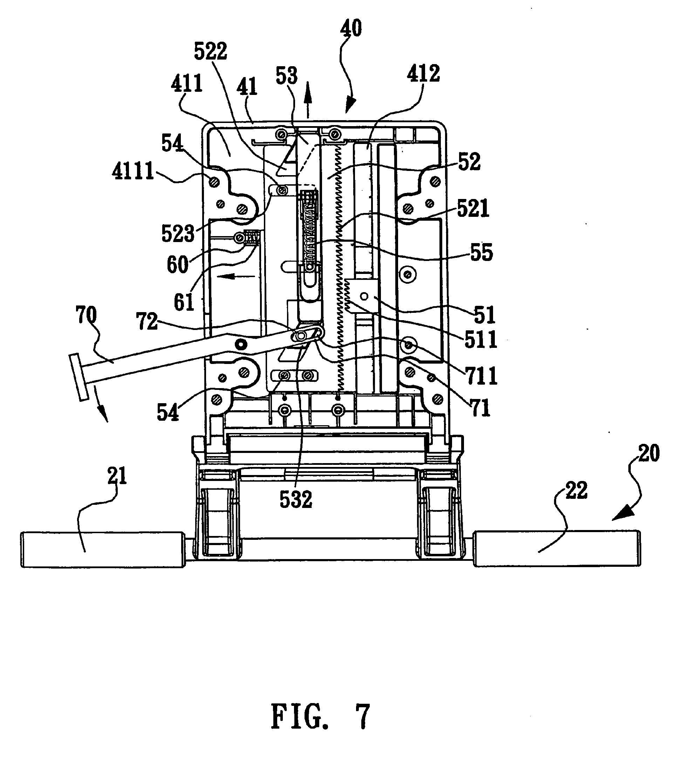

As shown in FIG. 6 and FIG. 7, in the second embodiment of the present invention when the size of the display panel 11 is larger, the sliding plate 52 can be controlled by pressing laterally. The sliding plate 52 in the control set can be further controlled by a handle 70 with larger torque. The handle 70 is disposed transversely on the lateral side of the sliding plate 52, and a proper location on the handle 70 and near the middle of the handle 70 is pivotally connected to the bottom of the containing groove 411 disposed on the lateral side of the sliding plate 52. A long slot 711 is disposed on the front end 71 of the handle 70, and a guiding member 72 fixed to the oblique guiding block 532 of the guiding plate 53 is disposed therein. By pulling the handle 70 extended from the lateral side of the seat body 41, the guiding member 72 disposed in the long slot 711 can have a larger force to push the guiding plate 53 so as to make the elastic member 55 to be deformed, and the guiding plate 53 can move on the upper surface of the sliding plate 52. When the guiding plate 53 moves, the oblique guiding block 532 disposed on the lower surface of the guiding plate 53 can simultaneously push the wall surface of the oblique slot 522 of the sliding plate 52 in order to make the sliding plate 52 to move toward a lateral side, and further, to make teeth 521 of the sliding plate 52 separated from the teeth 511 of the locking member 51 for the locking member 51 to be unfixed. Meanwhile, the connecting seat 40 can be pushed by the handle 70 for making the sliding block 31 move upward and downward along the vertical slot 412 so as to adjust the angle between the base seat 20 and the connecting seat 40. Because the handle 70 is disposed on the lateral side of the supporting stand, the user can use the handle 70 from the front of the display panel, and the length of the handle 70 can be increased with the size of the display panel. Therefore, the handle 70 can be used in display panels of various sizes from the lateral side of the display panel.

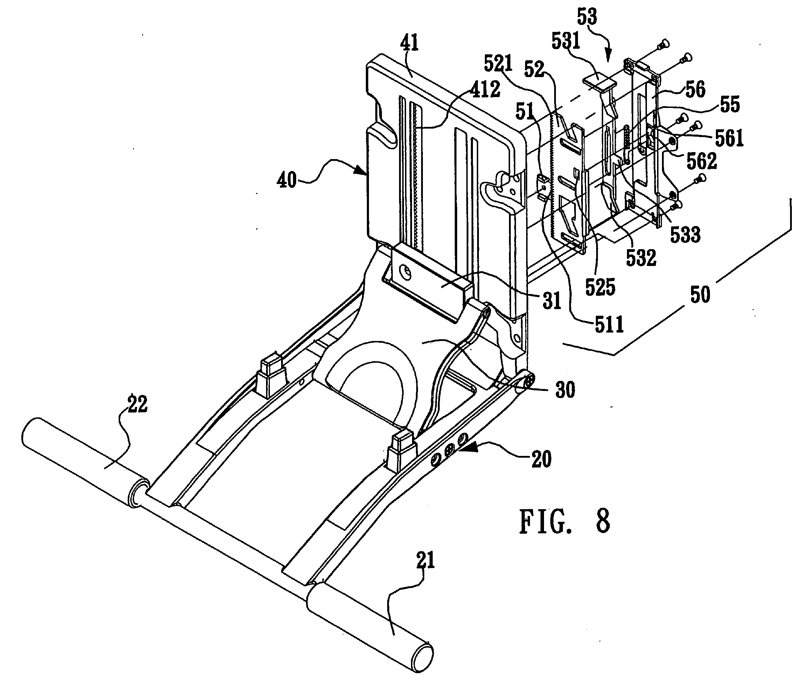

As shown in FIG. 8, in the third embodiment of the present invention, the control set 50 of the connecting seat 40 further includes a cover plate 56 covering the surface of the control set 50 and fixed to the bottom of the containing groove 411. A hole 561 is opened on the cover plate 56. An elastic V-shaped positioning block 562 disposed in the hole 561 is extended from the wall surface of the hole 561. The positioning block 562 can be positioned in the positioning hole 525 opened correspondingly on the sliding plate 52, so as to make the sliding plate 52 fixed and the teeth 521 of the sliding plate 52 to be engaged with the teeth 511 of the locking member 51. Thereby, a heavier display panel 11 or more pressing force neither makes the seat body 41 of the connecting seat 40 deformed nor makes the teeth 521 separated form the teeth 511. Therefore, a heavier display panel 11 can be supported by the angle adjustable supporting stand in the present invention.

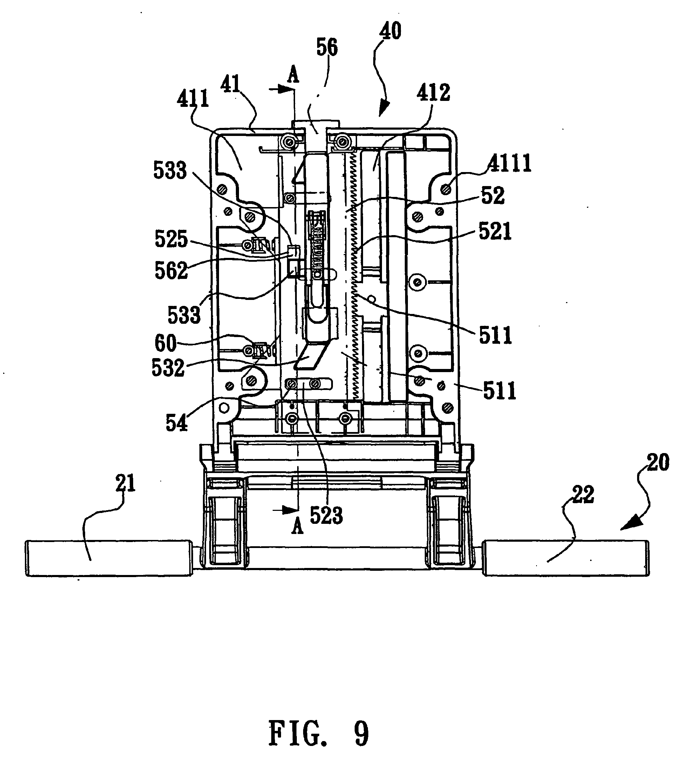

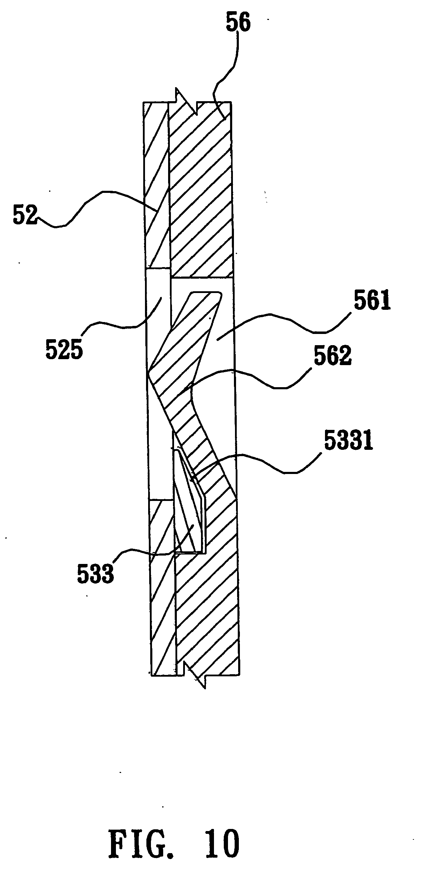

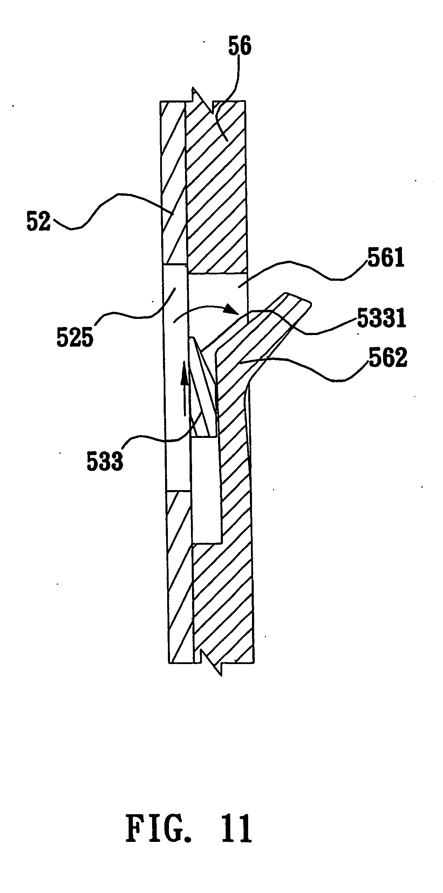

As shown in FIG. 9, FIG. 10 and FIG. 11, a wedge 533 with an inclined guiding surface 5331 is disposed on a lateral side of the guiding plate 53. The wedge 533 is contained in the hole 561 opened on the cover plate 56, and the inclined guiding surface 5331 is corresponding to the rear end of the positioning block 562. When the angle between the base seat 20 and the connecting seat 40 is to be adjusted and the guiding plate 53 moves along a single direction by the control of the handle 531, the wedge 533 can move in the hole 561 of the cover plate 56 simultaneously with the guiding plate 53. The positioning block 562 is pushed out of the positioning hole 525 of the sliding plate 52 by the inclined guiding surface 5331 of the wedge 533 for the sliding plate 52 to be unfixed. At the meantime, the oblique guiding blocks 532 on the lower surface of the guiding plate 53 can push the wall surface of the oblique slot 522 of the sliding plate 52 so as to make the sliding plate 52 to move toward a lateral side, and thereafter the locking member 51 is unfixed for the angle between the base seat 20 and the connecting seat 40 to be adjusted.

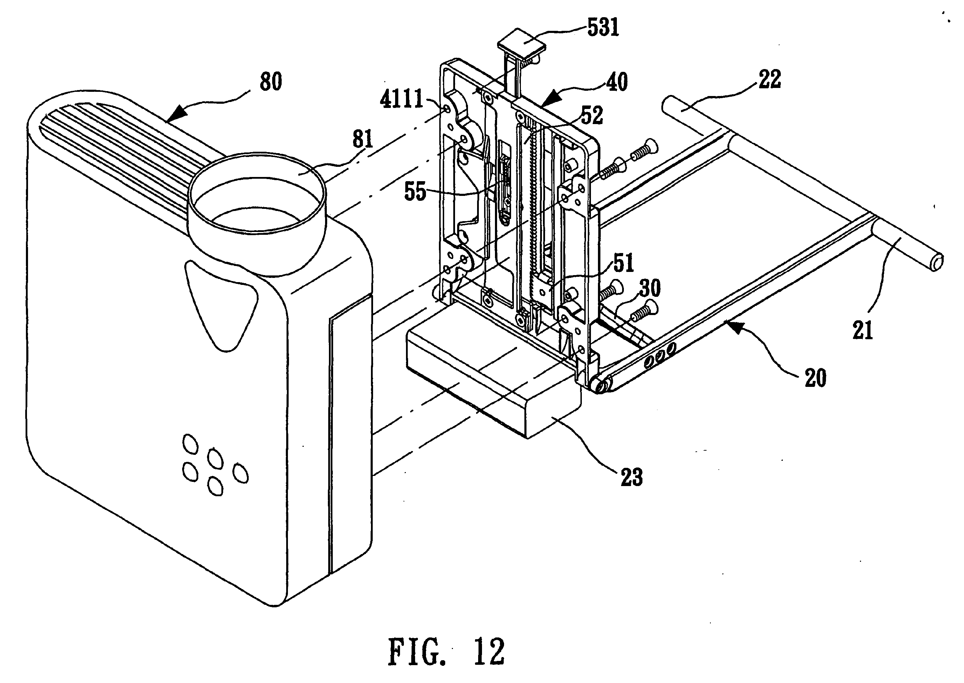

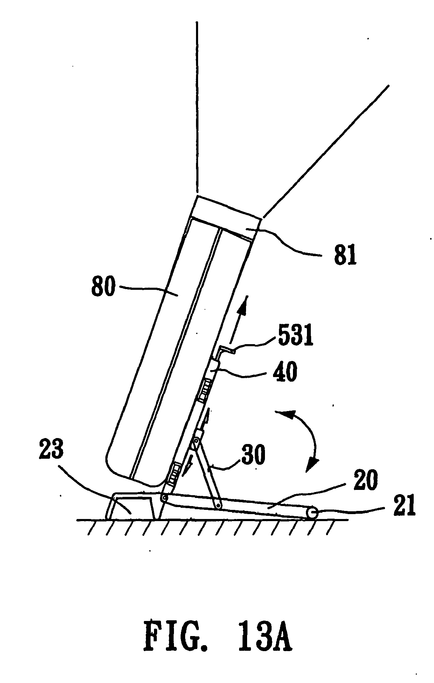

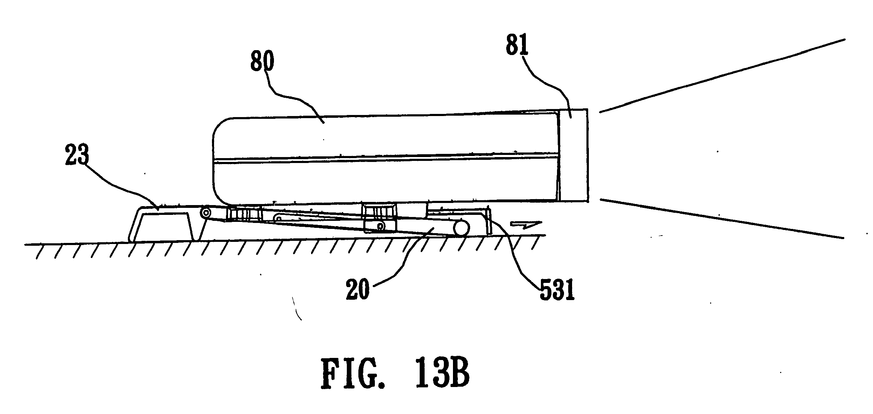

As shown in FIG. 12, the angle adjustable supporting stand in the present invention can be applied in a projection device 80 screwed to the connection holes 4111 on the front of the connecting seat 40. A balance seat 23 is further disposed on the front of the base seat 20 for the projection device 80 assembled on the supporting stand to be supported on a desk by the balance seat 23, level foot 21 and foot 22. In the present embodiment, when the projection device 80 is assembled, the projection lens 81 is assembled upward for the projection device 80 to project images on the ceiling (as shown in FIG. 13A) and one can view the images when lying down. When the location of the projected image is to be changed, the handle 531 is pulled to make the locking member 51 unfixed; in the meantime, the projection device 80 is pulled to make the sliding block 31 move up and down in the vertical slot 412, and thereby the angle between the connecting seat 40 and the base seat 20 can be adjusted. Consequently, the projection device 80 can project images on the wall (as shown in FIG. 13B) or on the ceiling.

Following the detailed description of the present invention above, those skilled in the art will readily observe that numerous modifications and alterations of the device may be made while retaining the teachings of the invention. Accordingly, the above disclosure should be construed as limited only by the metes and bounds of the appended claims.

## Claims

1. An angle adjustable supporting stand, comprising:
a base seat (20);
a connecting seat (40) with a containing groove (411), one end of the connecting seat being pivotally connected to the front of the base seat, a vertical slot (412) being disposed in the bottom of the containing groove;
a supporting plate (30) disposed on the rear of the connecting seat, the lower end of the supporting plate being pivotally connected to the base seat, a sliding block (31) being disposed on the upper end of the supporting plate and having at least one protruding post (311), the protruding post being contained in the vertical slot and moving up and down in the vertical slot;
a control set (50) disposed in the containing groove and on a lateral side of the vertical slot, the control set comprising a locking member (51), a sliding plate (52) and a guiding plate (53), the locking member being connected with the protruding post, a plurality of teeth (511) being disposed on a lateral side of the locking member, the sliding plate being disposed on a lateral side of the locking member, a plurality of teeth (521) being disposed on one side of the sliding plate to be engaged with the teeth of the locking member, the guiding plate being disposed on the sliding plate to control the sliding plate to be unfixed from the locking member.

2. The angle adjustable supporting stand according to claim 1, wherein a plurality of oblique slots (522) is disposed on the sliding plate and a plurality of oblique guiding blocks (532) is disposed on the guiding plate, and the plurality of oblique slots contain the plurality of oblique guiding blocks.

3. The angle adjustable supporting stand according to claim 2, wherein a handle (531) is extended from an upper end of the guiding plate.

4. The angle adjustable supporting stand according to claim 2, wherein the control set further comprises a handle (70) disposed transversely on the sliding plate, and the handle is pivotally connected to the bottom of the containing groove, a slot (711) being disposed on a front end of the handle, at least one guiding member (72) being fixed to the guiding plate through the slot.

5. The angle adjustable supporting stand according to claim 1, wherein a pair of level feet (21, 22) is levelly extended from the rear end of the base seat toward two lateral sides of the base seat.

6. The angle adjustable supporting stand according to claim 1, wherein at least one connection hole (4111) is disposed around the containing groove for connecting a display panel (11).

7. The angle adjustable supporting stand according to claim 1, wherein a balance seat (23) is disposed on the front of the base seat, and a projection device (80) is disposed on the front of the connecting seat.

8. The angle adjustable supporting stand according to claim 1, wherein the control set further comprises an elastic member (55), one end of the elastic member being fixed to the guiding plate and another end thereof being fixed to the bottom of the containing groove, the disposition direction of the elastic member being the same as the moving direction of the guiding plate.

9. The angle adjustable supporting stand according to claim 1, wherein at least one level slot (523) are disposed on the sliding plate, and a guiding member fixed to the bottom of the containing groove is disposed in the level slot for guiding the sliding plate to move levelly.

10. The angle adjustable supporting stand according to claim 1, wherein the control set further comprises a reposition member (60), one end of the reposition member pushing a lateral side of the guiding plate and another end thereof being fixed to the connecting seat, the lateral side being different from the lateral side of the vertical slot and the disposition direction of the reposition member being the same as the moving direction of the sliding plate.

11. The angle adjustable supporting stand according to claim 1, wherein the control set further comprises a cover plate (56) disposed on the guiding plate and fixed to the connecting seat, a hole (561) being disposed on the cover plate, a V-shaped positioning block (562) disposed in a positioning hole (525) opened on the sliding plate being extended from the wall surface of the hole, a wedge (533) being disposed on a lateral side of the guiding plate, the wedge being contained in the hole.

## Patentansprüche

1. Winkelverstellbare Stützvorrichtung, mit:
- einem Basissitz (20);
- einem Verbindungssitz (40) mit einer Aufnahmenut (411), wobei ein Ende des Verbindungssitzes schwenkbar mit der Vorderseite des Basissitzes verbunden ist, und wobei ein vertikaler Schlitz (412) in dem Boden der Aufnahmenut angeordnet ist;
- einer an der Rückseite des Verbindungssitzes angeordneten Stützplatte (30), wobei das untere Ende der Stützplatte schwenkbar mit dem Basissitz verbunden ist, ein Gleitblock (31) an dem oberen Ende der Stützplatte angeordnet ist und zumindest einen vorragenden Pfosten (311) aufweist, und der vorragende Pfosten in dem vertikalen Schlitz aufgenommen ist und sich in dem vertikalen Schlitz auf und ab bewegt;
- einem Steuerungssatz (50), der in der Aufnahmenut und auf einer lateralen Seite des vertikalen Schlitzes angeordnet ist, wobei der Steuerungssatz ein Verriegelungselement (51), eine Gleitplatte (52) und eine Führungsplatte (53) umfasst, das Verriegelungselement mit dem vorragenden Pfosten verbunden ist, eine Vielzahl von Zähnen (511) an einer lateralen Seite des Verriegelungselements angeordnet ist, die Gleitplatte an einer lateralen Seite des Verriegelungselements angeordnet ist, eine Vielzahl von Zähnen (521) an einer Seite der Gleitplatte für einen Eingriff mit den Zähnen des Verriegelungselements angeordnet ist, und die Führungsplatte an der Gleitplatte angeordnet ist, um eine Entriegelung der Gleitplatte von dem Verriegelungselement zu steuern.

2. Winkelverstellbare Stützvorrichtung nach Anspruch 1, wobei eine Vielzahl von schrägen Schlitzen (522) an der Gleitplatte und eine Vielzahl von schrägen Führungsblöcken (532) an der Führungsplatte angeordnet ist, und die Vielzahl von schrägen Schlitzen nimmt die Vielzahl von schrägen Führungsblöcken auf.

3. Winkelverstellbare Stützvorrichtung nach Anspruch 2, wobei sich ein Griff (531) von einem oberen Ende der Führungsplatte wegerstreckt.

4. Winkelverstellbare Stützvorrichung nach Anspruch 2, wobei der Steuerungssatz ferner einen Griff (70) umfasst, der quer an der Gleitplatte angeordnet ist, der Griff schwenkbar mit dem Boden der Aufnahmenut verbunden ist, ein Schlitz (711) an einem vorderen Ende des Griffs angeordnet ist, und zumindest ein Führungselement (72) ist der Führungsplatte durch den Schlitz befestigt ist.

5. Winkelverstellbare Stützvorrichtung nach Anspruch 1, wobei ein Paar von Horizontalfüßen (21, 22) sich horizontal von dem rückseitigen Ende des Basissitzes in Richtung von zwei lateralen Seiten des Basissitzes erstreckt.

6. Winkelverstellbare Stützvorrichtung nach Anspruch 1, wobei zumindest ein Verbindungsloch (4111) um die Aufnahmenut herum zur Verbindung mit einer Anzeigetafel (11) angeordnet ist.

7. Winkelverstellbare Stützvorrichtung nach Anspruch 1, wobei ein Ausgleichssitz (23) an der Vorderseite des Basissitzes angeordnet ist, und eine Projektionsvorrichtung (80) an der Vorderseite des Verbindungssitzes angeordnet ist.

8. Winkelverstellbare Stützvorrichtung nach Anspruch 1, wobei der Steuerungssatz ferner ein elastisches Element (55) umfasst, wobei ein Ende des elastischen Elements an der Führungsplatte und ein anderes Ende davon am Boden der Aufnahmenut befestigt ist, wobei die Anordnungsrichtung des elastischen Elements gleich der Bewegungsrichtung der Führungsplatte ist.

9. Winkelverstellbare Stützvorrichtung nach Anspruch 1, wobei zumindest ein horizontaler Schlitz (523) an der Gleitplatte angeordnet ist, und ein am Boden der Aufnahmenut befestigtes Führungselement in dem horizontalen Schlitz zum Führen der Gleitplatte in einer horizontalen Bewegung angeordnet ist.

10. Winkelverstellbare Stützvorrichtung nach Anspruch 1, wobei der Steuerungssatz ferner ein Verstellelement (60) umfasst, wobei ein Ende des Verstellelements eine laterale Seite der Führungsplatte drückt und ein anderes Ende davon fest mit dem Verbindungssitz verbunden ist, wobei die laterale Seite verschieden von der lateralen Seite des vertikalen Schlitzes ist und die Anordnungsrichtung des Verstellelements gleich der Bewegungsrichtung der Gleitplatte ist.

11. Winkelverstellbare Stützvorrichtung nach Anspruch 1, wobei der Steuerungssatz ferner eine Deckplatte (56) umfasst, die an der Führungsplatte angeordnet und am Verbindungssitz befestigt ist, wobei ein Loch (561) an der Deckplatte angeordnet ist, ein V-förmiger Positionierblock (562) in einem Positionierloch (525) angeordnet ist, das sich in der Gleitplatte befindet und sich von der Wandfläche des Lochs erstreckt, ein Keil (533) in einer lateralen Seite der Führungsplatte angeordnet ist, und der Keil in dem Loch aufgenommen ist.

## Revendications

1. Stand de support ajustable de manière angulaire, comprenant :
un siège de base (20) ;
un siège de connexion (40) avec une gorge de réception (411), une extrémité du siège de connexion étant connectée en pivotement à l'avant du siège de base, une fente verticale (412) étant disposée dans le fond de la gorge de réception ;
une plaque de support (30) disposée sur l'arrière du siège de connexion, l'extrémité inférieure de la plaque de support étant connectée en pivotement au siège de base, un bloc coulissant (31) étant disposé sur l'extrémité supérieure de la plaque de support et ayant au moins un pilier en projection (311), le pilier en projection étant contenu dans la fente verticale et se déplaçant vers le haut et vers le bas dans la fente verticale ;
une unité de commande (50) disposée dans la gorge de réception et sur un côté latéral de la fente verticale, l'unité de commande comprenant un élément de blocage (51), une plaque coulissante (52) et une plaque de guidage (53), l'élément de blocage étant connecté avec le pilier en projection, une pluralité de dents (511) étant disposées sur un côté latéral de l'élément de blocage, la plaque coulissante étant disposée sur un côté latéral de l'élément de blocage, une pluralité de dents (521) étant disposées sur un côté de la plaque coulissante à engager avec les dents de l'élément de blocage, la plaque de guidage étant disposée sur la plaque coulissante pour commander la plaque coulissante pour annuler sa fixation vis-à-vis de l'élément de blocage.

2. Stand de support ajustable de manière angulaire, selon la revendication 1, dans lequel une pluralité de fentes obliques (522) sont disposées sur la plaque coulissante et une pluralité de blocs de guidage obliques (532) sont disposés sur la plaque de guidage, la pluralité de fentes obliques contenant la pluralité de blocs de guidage obliques.

3. Stand de support ajustable de manière angulaire, selon la revendication 2, dans lequel une poignée (531) est en extension depuis une extrémité supérieure de la plaque de guidage.

4. Stand de support ajustable de manière angulaire, selon la revendication 2, dans lequel l'unité de commande comprend encore une poignée (70) disposée transversalement sur la plaque coulissante, ladite poignée étant connectée en pivotement au fond de la gorge de réception, une fente (711) étant disposée sur l'extrémité frontale de la poignée, et au moins un élément de guidage (72) étant fixé à la plaque de guidage à travers la fente.

5. Stand de support ajustable de manière angulaire, selon la revendication 1, dans lequel une paire de pieds de nivellement (21, 22) s'étendent en fonction du niveau depuis l'extrémité arrière du siège de base vers deux côtés latéraux du siège de base.

6. Stand de support ajustable de manière angulaire, selon la revendication 1, dans lequel au moins un trou de connexion (4111) est disposé autour de la gorge de réception pour connecter un panneau d'affichage (11).

7. Stand de support ajustable de manière angulaire, selon la revendication 1, dans lequel un siège d'équilibrage (23) est disposé sur la partie frontale du siège de base, et un dispositif de projection (80) est disposé sur l'avant du siège de connexion.

8. Stand de support ajustable de manière angulaire, selon la revendication 1, dans lequel l'unité de commande comprend en outre un élément élastique (55), une extrémité de l'élément élastique étant fixée sur la plaque de guidage et une autre extrémité de celui-ci étant fixée au fond de la gorge de réception, la direction de la disposition de l'élément élastique étant la même que la direction de déplacement de la plaque de guidage.

9. Stand de support ajustable de manière angulaire, selon la revendication 1, dans lequel au moins une fente de niveau (523) est disposée sur la plaque coulissante, et un élément de guidage fixé au fond de la gorge de réception est disposé dans la fente de niveau pour guider la plaque de coulissement en déplacement de manière nivelée.

10. Stand de support ajustable de manière angulaire, selon la revendication 1, dans lequel l'unité de commande comprend en outre un élément de repositionnement (60), une extrémité de l'élément de repositionnement poussant un côté latéral de la plaque de guidage, et une autre extrémité de celui-ci étant fixée au siège de connexion, le côté latéral étant différent du côté latéral de la fente verticale et la direction de disposition de l'élément de repositionnement étant la même que la direction de déplacement de la plaque coulissante.

11. Stand de support ajustable de manière angulaire, selon la revendication 1, dans lequel l'unité de commande comprend en outre une plaque de couverture (56) disposée sur la plaque de guidage et fixée sur le siège de connexion, un trou (561) étant ménagé sur la plaque de couverture, un bloc de positionnement (562) en forme de V, disposé dans un trou de positionnement (525) ouvert sur la plaque coulissante, s'étendant depuis la surface de paroi du trou, un coin (533) étant disposé sur un côté latéral de la plaque de guidage, ledit coin étant contenu dans le trou.
